# EUROPEAN PATENT SPECIFICATION

(11) **EP 2 105 325 B1**
(45) Date of publication and mention of the grant of the patent: **22.12.2010**
(21) Application number: 07832676.6
(22) Date of filing: 28.11.2007
(51) Int. Cl.: B60C 13/00, B60C 13/02

(54) **TIRE**
REIFEN
PNEU

(30) Priority: 20.12.2006 JP 2006342784
(43) Date of publication of application: 30.09.2009
(73) Proprietor: Bridgestone Corporation, Tokyo 104-8340 (JP)
(72) Inventor: MIYASAKA, Atsushi, Kodaira-shi Tokyo 187-8531 (JP)
(74) Representative: Whalley, Kevin
(86) International application number: PCT/JP2007/072954
(87) International publication number: WO 2008/075544

(56) References cited:
- EP-A- 0 751 014
- EP-A- 1 310 384
- JP-A- 09 011 713
- JP-A- 2003 182 317
- JP-A- 2006 213 282
- US-A1- 2004 003 881

## Description

### TECHNICAL FIELD

The present invention relates to a tire provided with a mark which consists of characters and is arranged in an annular decorative band disposed on a surface of at least one of paired sidewalls. More particularly, the present invention is directed to improve a readability of the mark without sacrificing a visibility of the mark.

### RELATED ART

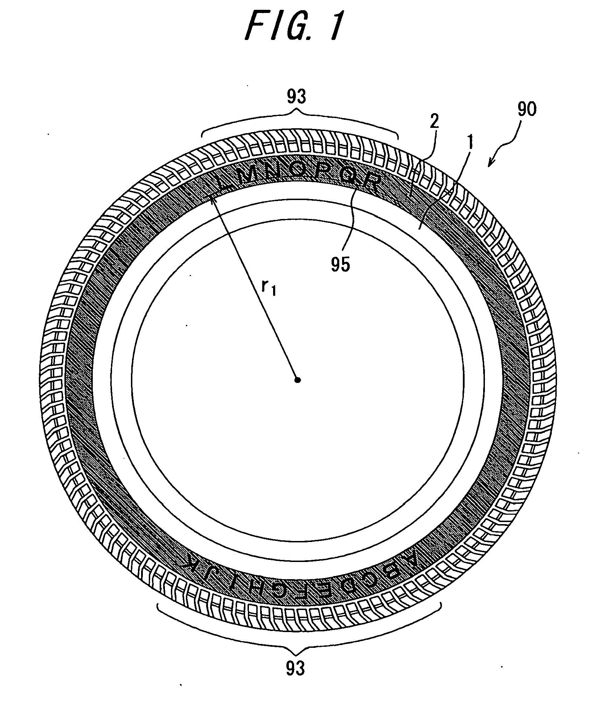

As shown in Fig. 1, marks 93 such as a company name or a brand name consisting of characters and symbols is indicated on an annular decorative band disposed on a surface of a sidewall 1 of a tire 90. These marks 93 conventionally are arranged concentrically with a center of rotation of the tire as their common center. This means that an inner envelope curve 95 in a tire radial direction of the marks 93, for instance, is disposed on an arc with a radius r₁ and a center agreeing with the center of rotation of the tire (see Patent Document 1, for example).
Patent Document 1: JP2003182317A

Another tire according to the preamble of claim 1 is disclosed in EP-1 310 384 A2.

### DISCLOSURE OF THE INVENTION

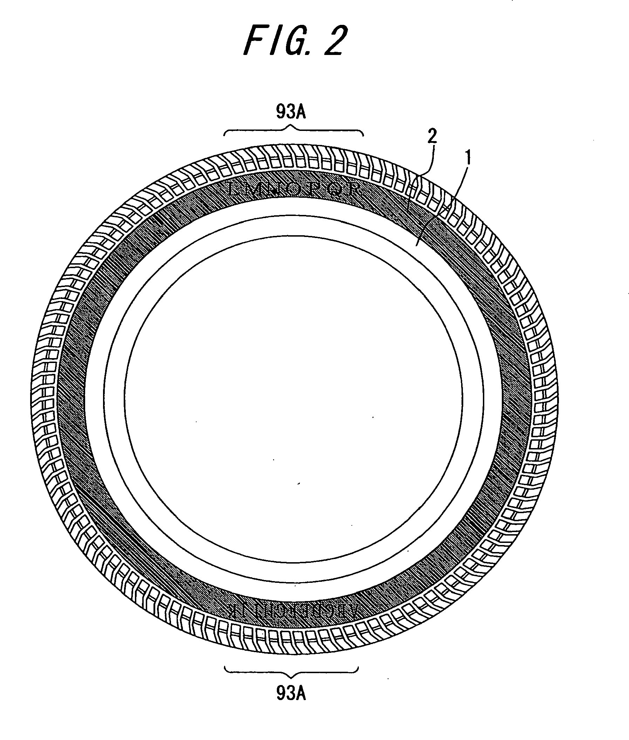

However, in the event that one read a character string, such character string that consists of characters arranged in a straight line is the easiest to be read. When the characters are arranged on an arc and a radius of curvature of the arc is made smaller, the character string loses more readability. Meanwhile, when the characters are to be arranged in a straight line within the annular decorative band 2 as shown in Fig. 2, at least one of a length and a width of the character string has to be reduced in order the character string to be contained in the annular decorative band. In this case, the visibility of the mark 93 is deteriorated.

The present invention has been made in view of these problems and its object is to provide a tire having a mark consisting of a character string capable of improving a readability of the character string without decreasing a visibility of the mark.

<1> A first aspect the present invention is a tire provided with at least one mark consisting of a character string, the mark being arranged in an annular decorative band disposed on a surface of at least one of paired sidewalls, wherein at least one of the at least one mark has a property that an inner envelope curve in a tire radial direction has an arc-like shape convex outwardly in the tire radial direction, and a radius of curvature of the arc is greater than a distance from a center of rotation of the tire to a point on the arc closest to the center of rotation of the tire.

<2> A second aspect of the present invention is the tire according to the item <1>, wherein the mark having said property is composed of at least one flat surface in parallel with a surface of a sidewall and a background portion formed by arranging a plurality of ridges in parallel with each other is disposed around the mark, and wherein an inner edge in the tire radial direction of the background portion have a radius of curvature identical with that of the inner envelope curve in the tire radial direction of the mark having said property.

<3> A third aspect of the present invention is the tire according to the item <1> or <2>, wherein three marks having said property are arranged at equal spaces therebetween in a tire circumference direction.

### EFFECT OF THE INVENTION

According to the first aspect, the at least one mark consisting of a character string is configured so that the inner envelope curve in the tire radial direction has an arc-like shape convex outwardly in the tire radial direction and a radius of curvature of the arc is greater than a distance from the center of rotation of the tire to a point on the arc closest to the center of rotation of tire. This makes it possible to arrange the character string nearly in a straight line to facilitate readability of the characters whereas the arrangement is not a complete straight line, so that the characters can be enlarged in accordance with the size of the annular decorative band to be able to avoid deterioration of visibility.

According to the second aspect, the mark having the above-mentioned property is composed of at least one flat surface in parallel with a surface of a sidewall and a background portion formed by arranging a plurality of ridges in parallel with each other is disposed around the mark, so that a contrast of the character string with respect to the surroundings is enhanced to improve visibility of the character strings. Further, the inner edge in the tire radial direction of the background portion have a radius of curvature identical with that of the inner envelope curve in the tire radial direction of the mark having said property, so that an effect similar to that achieved by a character string with an underline can be obtained to emphasize the character string and thus further enhance the visibility.

According to the third aspect, three marks having the above-mentioned property are arranged at equal spaces therebetween in the circumference direction, so that a visibility of the characters and an aesthetic design can be most effectively balanced. If one ore two marks are arranged, a visual balance may not be good. When two marks, for example, are arranged and the tire is stopped at a rotational position where the marks lie at the uppermost and lowermost points, the arrangement is well-balanced in terms of the design. However, if the tire is stopped at the rotational position where the two marks lie with slight deviations from the uppermost and lowermost points, an axis extending through the uppermost and lowermost points seems to incline, which deteriorates a visual balance of the marks. It is desirable to ensure the visual balance of the marks in a state of a vehicle being stopped regardless of the rotational position of the tire. In this regard, it is preferred that three or more marks are arranged.

Meanwhile, when four or more marks having the above-mentioned property are arranged in the tire circumference direction, the circumferentially adjacent marks may have a too small space therebetween or may interfere with each other. In this case, the visibility of the marks is deteriorated.

### BRIEF DESCRIPTION OF THE DRAWINGS

Fig. 1 is a side view of a conventional tire.
Fig. 2 is a side view of a tire showing in a state that character strings are arranged in straight lines.
Fig. 3 is a side view of an embodiment of the tire according to the present invention.

### DESCRIPTION OF THE SYMBOLS

- 1: side wall
- 2: decorative band
- 3: mark consisting of a character string
- 5: background portion
- 6: ridge
- 13: inner envelope curve in the tire radial direction of the mark
- 15: inner edge in the tire radial direction of the background portion

### BEST MODE FOR CARRYING OUT THE INVENTION

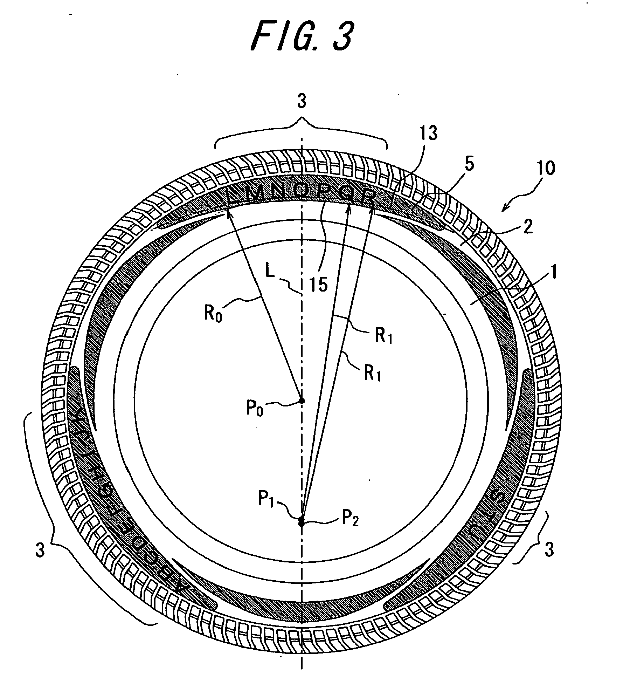

With reference to the drawings, an embodiment of the present invention is discussed. Fig. 3 is a side view of a tire according to the present invention. At least one of sidewall surfaces 1 of a tire 10 is provided with a decorative region 2. In the decorative region 2, one or more (three in the shown embodiment) marks 3 consisting of character strings are arranged.

The tire 10 according to the present invention is characterized in that the at least one (all three in this embodiment) of the marks 3 has an inner envelope curve 13 in the tire radial direction having an arc-like shape convex outwardly in the tire radial direction, and a radius of curvature R₁ of the arc is greater than a distance R₀ from a center of rotation P₀ of the tire to a point on the arc closest to the center of rotation of the tire. A center of rotation P₁ of the arc constituting the envelope curve preferably lies on an extension line of a segment connecting a midpoint of circumferential outermost points of the mark and the center of rotation of the tire. This enables an arrangement which does not incline with respect to a circle with the center of rotation of the tire as its center to provide a stable design.

In this context, the inner envelope curve in the radial direction of the tire means a curve formed by an arc connecting innermost points in the tire radial direction of characters constituting the mark.

In this way, the radius of curvature R₁ of the inner envelope curve 13 in the tire radial direction of the mark 3 is made larger than the radius R₀ thereat from the center of rotation of the tire, so that the characters are arranged nearly in a straight line to facilitate the readability of the characters whereas, by not arranging them in a complete straight line, the mark can be arranged in an acceptable space in the decorative band.

Further, as shown in the drawing, it is preferred that the mark 3 such as outline characters is configured of a plurality of flat surfaces in parallel with the sidewall surface while a background portion 5 consisting of a plurality of ridges 6 in parallel with each other in the form of a line or an arc is arranged around the mark 3, which further improves the visibility of the mark 3.

In this case, an inner edge 15 in the tire radial direction of the background portion 5 is preferably composed of an arc having a radius of curvature identical with the radius of curvature R₁ of the envelope curve 13. The edge 15 creates the underline effect for the mark 3 consisting of the characters to further enhance the visibility of the characters. In addition, a center P₂ of curvature of an arc constituting the inner edge 15 in the tire radial direction of the background part 5 is preferably disposed on an extension of a segment L connecting the center of rotation P₀ of the tire and the center of rotation P₁ of the arc constituting the envelope curve 13, so that the arc constituting the envelope line 13 runs parallel to the inner edge 15 in the tire radial direction of the background portion 5 to further enhance the above-mentioned underline effect.

Moreover, three of the marks 3 satisfying the above-mentioned condition are preferably arranged in the tire circumferential direction, as shown in the drawing, more preferably, at equal spaced therebetween. This can satisfy both of an aesthetic design and a visibility as described above.

### INDUSTRIAL APPLICABILITY

The present invention is applicable to various kinds of tires for different applications.

## Claims

1. A tire provided with a mark (3) consisting of a character string, the mark (3) being arranged in an annular decorative band disposed on a surface of at least one of paired sidewalls (1), **characterized in that**
at least one mark (3) has a property that an inner envelope curve in a tire radial direction (13) has an arc-like shape convex outwardly in the tire radial direction, and a radius of curvature (R₁) of the arc is greater than a distance (R₀) from a center of rotation (P₀) of the tire to a point on the arc closest to the center of rotation (P₀) of the tire.

2. The tire according to claim 1, wherein the mark (3) having said property is composed of at least one flat surface in parallel with a surface of a sidewall (1) and a background portion (5) formed by arranging a plurality of ridges (6) in parallel with each other is disposed around the mark (3), and wherein an inner edge in the tire radial direction of the background portion (15) have a radius of curvature identical with that of the inner envelope curve in the tire radial direction (13) of the mark (3) having said property.

3. The tire according to claim 1 or 2, wherein three marks (3) having said property are arranged at equal spaces therebetween in a tire circumference direction.

## Patentansprüche

1. Reifen, der mit einer Aufschrift (3) versehen ist, die aus einer Buchstabenkette besteht, wobei die Aufschrift (3) auf einem ringförmigen dekorativen Streifen angeordnet ist, der auf einer Oberfläche von mindestens einer von zwei Seitenwänden (1) aufgebracht ist, **dadurch gekennzeichnet, dass**
mindestens eine Aufschrift (3) die Eigenschaft hat, dass eine innere Hüllkurve in einer radialen Reifenrichtung eine bogenförmige Form aufweist, die sich nach Außen hin konvex in die radiale Reifenrichtung erstreckt, und ein Krümmungsradius (R₁) des Bogens größer ist als die Entfernung (R₀) vom Rotationszentrum (P₀) des Reifens zu einem Punkt auf dem Bogen, der dem Rotationszentrum (P₀) des Reifens am nächsten liegt.

2. Reifen nach Anspruch 1, wobei die Aufschrift (3) mit der Eigenschaft, aus mindestens einer flachen Oberfläche besteht, die parallel zu einer Oberfläche einer Seitenwand (1) liegt und ein Hintergrundabschnitt (5), der durch das Anbringen einer Mehrzahl von Rippen (6) parallel zueinander gebildet wird, um die Aufschrift (3) herum aufgebracht ist, und wobei ein innerer Rand in der radialen Reifenrichtung des Hintergrundabschnitts (15) einen Krümmungsradius aufweist, der mit dem der inneren Hüllkurve in der radialen Reifenrichtung (13) der Aufschrift (3) mit der Eigenschaft identisch ist.

3. Reifen nach Anspruch 1 oder 2, wobei drei Aufschriften (3) mit der Eigenschaft mit gleichem Abstand dazwischen in einer Reifenumfangsrichtung angebracht sind.

## Revendications

1. Pneumatique pourvu d'une marque (3) constituée d'une chaîne de caractères, la marque (3) étant agencée dans une bande décorative annulaire disposée sur une surface d'au moins une parmi une paire de parois latérales (1), **caractérisé en ce que**
au moins une marque (3) a la propriété de présenter une courbe enveloppe interne dans une direction radiale du pneumatique ayant une forme en arc progressant vers l'extérieur de manière convexe dans une direction radiale du pneumatique, et un rayon de courbure (R₁) de l'arc est supérieur à la distance (R₀) allant du centre de rotation (P₀) du pneumatique jusqu'à un point sur l'arc étant le plus proche du centre de rotation (P₀) du pneumatique.

2. Pneumatique selon la revendication 1, dans lequel la marque (3) ayant ladite propriété est composée d'au moins une surface plate parallèlement à une surface d'une paroi latérale (1) et une partie d'arrière-plan (5) formée en agençant une pluralité de nervures (6) parallèlement les unes aux autres est disposée autour de la marque (3), et dans lequel un bord interne dans la direction radiale du pneumatique de la partie d'arrière-plan (15) a un rayon de courbure identique à celui de la courbe enveloppe interne dans la direction radiale du pneumatique (13) de la marque (3) présentant ladite propriété.

3. Pneumatique selon la revendication 1 ou 2, dans lequel trois marques (3) ayant ladite propriété sont agencées par espacement égal entre elles dans une direction circonférentielle du pneumatique.
